# EUROPÄISCHE PATENTSCHRIFT

(11) **EP 0 724 097 B1**
(45) Veröffentlichungstag und Bekanntmachung des Hinweises auf die Patenterteilung: **02.02.2000**
(21) Anmeldenummer: 95116527.3
(22) Anmeldetag: 20.10.1995
(51) Int. Cl.: F16J 15/16

(54) **Dichtungsanordnung**
Sealing arrangement
Dispositif d'étanchéité

(30) Priorität: 27.01.1995 DE 19502563
(43) Veröffentlichungstag der Anmeldung: 31.07.1996
(73) Patentinhaber: Firma Carl Freudenberg, 69469 Weinheim (DE)
(72) Erfinder: Messner, Norbert, Dr., D-35279 Neustadt-Mengsberg (DE)

(56) Entgegenhaltungen:
- EP-A- 0 004 948
- EP-A- 0 104 504
- DE-A- 4 305 891
- FR-A- 1 135 032
- US-A- 4 921 258

## Beschreibung

Die Erfindung betrifft eine Dichtungsanordnung für zwei einander konzentrisch zugeordnete Maschinenelemente, die in axialer Richtung relativ zueinander hin- und herbewegbar sind, wobei eines der Maschinenelemente durch einen beidseitig durckbeaufschlagbaren Kolben oder eine Stange und das andere Maschinenelement durch einen den Kolben oder die Stange außenseitig mit radialem Abstand umschließenden Zylinder gebildet ist, umfassend eine in dem durch den Abstand gebildeten Spalt angeordnete Dichtung aus polymerem Werkstoff mit einem statisch abdichtenden ersten Dichtteil und einem dynamisch abdichtendem zweiten Dichtteil, wobei eines der beiden Maschinenelemente eine in Richtung des anderen Maschinenelements offene Nut aufweist und wobei der erste Dichtteil den Nutgrund und der zweite Dichtteil die der Nut zugewandte Oberfläche des anderen Maschinenelements mit zumindest einer Dichtlippe dichtend berührt.

Aus FR-A-1 135 032 oder EP-A-0 104 504 ist eine Dichtungsanordnung der im Oberbegriff des Anspruches 1 umrissenen Art bekannt, welche eine Drosseleinrichtung zum Druckausgleich und zur Vermeidung des Abhebens einer Dichtlippe aufweist. Ferner ist aus der DE 37 22 152 A1 eine Dichtungsanordnung der vorstehend genannten Art bekannt. Ein Kolben ist mit einer Stange verbunden und innerhalb eines Zylinders angeordnet. Die Stirnflächen des Kolbens sind jeweils druckbeaufschlagbar und innerhalb des Zylinders in axialer Richtung hin- und herbewegbar. Um einerseits eine bedarfsweise rasche Hin- und Herbewegbarkeit des Kolbens zu gewährleisten, und andererseits zu vermeiden, daß der Kolben in seiner Endlage ungedämpft an das den Zylinder bildende Gehäuse anschlägt, ist eine Dämpfungsvorrichtungen vorgesehen, die über eine Einrichtung zur Verminderung der inneren Haftreibung verfügt. Die Dämpfungsvorrichtungen besteht aus einem Mantelrohr, in dem ein mit einer Kolbenstange verbundener, zwei Arbeitsräume unterteilender Dämpfungskolben axial gleitet sowie einem mit dem Mantelrohr verbundenen Führungskörper, welcher über eine Öffnung verfügt, durch die die Kolbenstange unter Bildung eines Ringspalts definierter Dicke ragt. In den Arbeitsräumen befindliche Dämpfungsfluid strömt unter großem Druckabfall entlang des Ringspalts nach außen und bewirkt auf diese Weise eine Zentrierung der Kolbenstange innerhalb der Öffnung, wobei das Dämpfungsfluid innerhalb des Ringspalts ein hydrostatisches Gleitlager bildet. Über den Ringspalt abströmendes Dämpfungsfluid wird über einen Kreislauf zurück zu den Arbeitsräumen gefördert. Die Dämpfungswirkung ist für die Verwendung als Stoßdämpfer bei Kraftfahrzeugen bestimmt.

Der Erfindung liegt die Aufgabe zugrunde, eine Dichtungsanordnung der eingangs genannten Art derart weiterzuentwickeln, daß man auf konstruktiv vereinfachte Weise und kostengünstig eine Endlagendämpfung erhält.

Nach der Erfindung wird hierzu eine Dichtungsanordnung nach Anspruch 1 bereitgestellt. Auf vorteilhafte Ausgestaltungen nehmen die Unteransprüche Bezug.

Nach der Erfindung hat die Dichtung der Dichtungsanordnung eine Endlagendämpfungseinrichtung für die Relativbewegung zwischen den beiden Maschinenelementen, welche in Form einer in die Dichtung integrierten Droseleinrichtung ausgelegt ist. Hierbei ist von Vorteil, daß die in die Dichtung integrierte Drosseleinrichtung einfach und kostengünstig herstellbar ist und daß es einer aufwendigen Bearbeitung metallischer Bauteile, beispielsweise des Kolbens oder der Verwendung separater Ventile nicht bedarf. Der Dämpfungsfaktor ist von der Ausgestaltung der Drosseleinrichtung innerhalb der Dichtung abhängig und kann durch entsprechende Ausgestaltung an die jeweiligen Gegebenheiten des Einzelfalles angepaßt werden.

Die Drosseleinrichtung wird durch eine sich im wesentlichen parallel zur Bewegungsrichtung erstreckende kanalartige Durchbrechung gebildet, die die Dichtung vollständig durchdringt und die gegeneinander abzudichtenden Räume strömungsleitend miteinander verbindet. Die Dämpfungswirkung wird bei einer derartigen Drosseleinrichtung durch die Hindurchpressung des abzudichtenden Mediums, bevorzugt eines Fluids, durch die kanalartige Durchbrechung bewirkt, die vom polymeren Werkstoff der Dichtung begrenzt ist.

Wird eines der Maschinenelemente durch einen Kolben gebildet, ist die Dichtung mit ihrer Drosseleinrichtung bevorzugt in einer Nut des Kolbens angeordnet, der relativ zum Gehäuse verschiebbar ist. Ist demgegenüber eines der Maschinenelemente durch eine Stange gebildet, ist die Dichtung bevorzugt in einer in Richtung der Stange offenen Nut des Zylinders gehalten.

Die Dichtung entspricht im wesentlichen der Bauform vorbekannter Nutringe und unterscheidet sich von diesen unter anderem dadurch, daß eine integrierte Drosseleinrichtung vorgesehen ist, die einen definierten Ölstrom von der Hochdruckseite zur Niederdruckseite ermöglicht.

Die Durchbrechung kann durch einen sich im wesentlichen parallel zur Bewegungsrichtung erstreckenden, in Richtung des Nutgrunds offenen Kanal gebildet sein.

Im Hinblick auf eine einfache Herstellung der Durchbrechung kann diese einen in axialer Richtung konstanten Querschnitt aufweisen. Abweichend davon ist auch ein entlang der axialen Ausdehnung der Durchbrechung variierter Querschnitt denkbar.

Die Drosseleinrichtung ist bevorzugt im ersten Dichtteil angeordnet. Hierbei ist von Vorteil, daß sich die Lage des ersten Dichtteils während des Gebrauchs der Dichtung, bezogen auf ihren Einbauraum nicht verändert und daher eine Beeinträchtigung der Endlagendämpfung zuverlässig vermieden wird. Der zweite, dynamisch abdichtende Dichtteil ist relativ zum ersten Dichtteil und zur Oberfläche des abzudichtenden Maschinenelements in radial Richtung beweglich.

Um einen Durchtritt durch die kanalartige Durchbrechung auch dann zu gewährleisten, wenn die Dichtung in axialer Richtung mit ihren Stirnseiten an zumindest einer der Seitenflächen der Nut anliegt, ist es vorgesehen, daß die Dichtung in axialer Richtung beiderseits im Bereich ihrer Stirnseiten jeweils zumindest eine sich in radialer Richtung erstreckende, nutförmige Ausnehmung aufweist und daß die Ausnehmungen mittels der Durchbrechung strömungsleitend miteinander verbunden sind. Auch wenn die Dichtung durch den anliegenden Differenzdruck an eine der Seitenflächen der Nut angepreßt wird, ist über die Ausnehmungen in den Stirnseiten der Dichtung eine Verbindung zwischen beiden Druckräumen gegeben.

Es kann vorgesehen sein, daß die Dichtung in axialer Richtung beiderseits auf ihren Stirnseiten jeweils in Umfangsrichtung verteilte, noppenförmige Abstandhalter aufweist. Auf jeder Stirnseite gelangen zumindest zwei Abstandhalter zur Anwendung, die in Umfangsrichtung gleichmäßig verteilt sind. Liegt die Dichtung mit ihren Stirnseite und den darauf angeordneten Abstandhaltern an den Seitenflächen der Nut an, ist auch dann eine Verbindung zwischen den beiden Druckräumen gegeben, da das Druckmedium vom Raum höheren Drucks zwischen den noppenförmigen Abstandhaltern hindurch in die kanalartige Durchbrechung und zwischen den noppenförmigen Abstandhaltern auf der Niederdruckseite in den Raum relativ niedrigeren Drucks fließt.

In Abhängigkeit von der Größe bzw. dem Querschnitt der Durchbrechung und/oder den Ausnehmungen/Abstandhaltern, stellt sich während der Endlagendämpfung ein definierter gedrosselter Ölstrom ein, der eine definierte Dämpfung bzw. Verzögerung der Relativbewegung der beiden Maschinenelemente zueinander bewirkt.

Der erste Dichtteil berührt den Nutgrund entlang seiner gesamten axialen Erstreckung mit gleichmäßiger radialer Vorspannung anliegend. Der erste Dichtteil berührt den Nutgrund flächig anliegend. Dadurch, daß der erste Dichtteil auf der dem Nutgrund zugewandten Seite keine Dichtlippe aufweist, ist eine exakte räumliche Zuordnung der Dichtung zu ihrem Einbauraum stets gegeben. Verkantungserscheinungen und daraus resultierende nachteilige Veränderungen der Dämpfungseigenschaft und/oder der statischen und/oder dynamischen Abdichtung werden dadurch zuverlässig ausgeschlossen.

Bevorzugt ist es vorgesehen, daß nur der erste Dichtteil beide den Nutgrund axial begrenzenden Seitenflächen anliegend berührt. Die axiale Länge der Dichtung entspricht der axialen Länge der Nut, wobei die axiale Ausdehnung der Dichtung im Bereich ihres ersten Dichtteils im herstellungsbedingten Zustand gleich der Breite der Nut in gleicher Richtung ist.

Der erste Dichtteil weist eine Ausdehnung in axialer Richtung auf, die größer ist als die Ausdehnung des zweiten Dichtteils in gleicher Richtung, wobei zumindest die Dichtlippe der axial benachbart angrenzenden Seitenfläche der Nut mit Abstand benachbart zugeordnet ist. Hierbei ist von Vorteil, daß die Dichtlippe des zweiten Dichtteils in radialer Richtung frei beweglich ist und dadurch die Oberfläche des abzudichtenden Maschinenelements stets mit gleichbleibender radialer Vorspannung dichtend umschließt. Dadurch, daß die Dichtung im wesentlichen die Form eines Nutrings aufweist, d.h. einen in axialer Richtung offenen, im wesentlichen C-förmigen Querschnitt, vermag die Dichtlippe Auslenkbewegungen der Oberfläche in radialer Richtung zu folgen.

Die erfindungsgemäße Dichtungsanordnung wird nachfolgend anhand der Fig. 1 bis 4 näher erläutert.

Es zeigen:
Fig. 1 ein erstes Ausführungsbeispiel einer Dichtungsanordnung in halbgeschnittener Darstellung, bei der die Dichtung im Bereich ihrer Stirnseiten mit Ausnehmungen versehen ist und die Dichtung als Einzelteil.
Fig. 2 ein zweites Ausführungsbeispiel er Dichtungsanordnung, wobei die Dichtung stirnseitig angeordnete, noppenförmige Abstandhalter aufweist.
Fig. 3 ein drittes Ausführungsbeispiel einer Dichtung, wobei in axialer Richtung einerseits Ausnehmungen zur Anwendung gelangen und in axialer Richtung andererseits noppenförmige Abstandhalter, die jeweils gleichmäßig in Umfangsrichtung verteilt sind.
Fig. 4 ein viertes Ausführungsbeispiel einer Dichtungsanordnung, die eine abweichende Drosseleinrichtung aufweist.

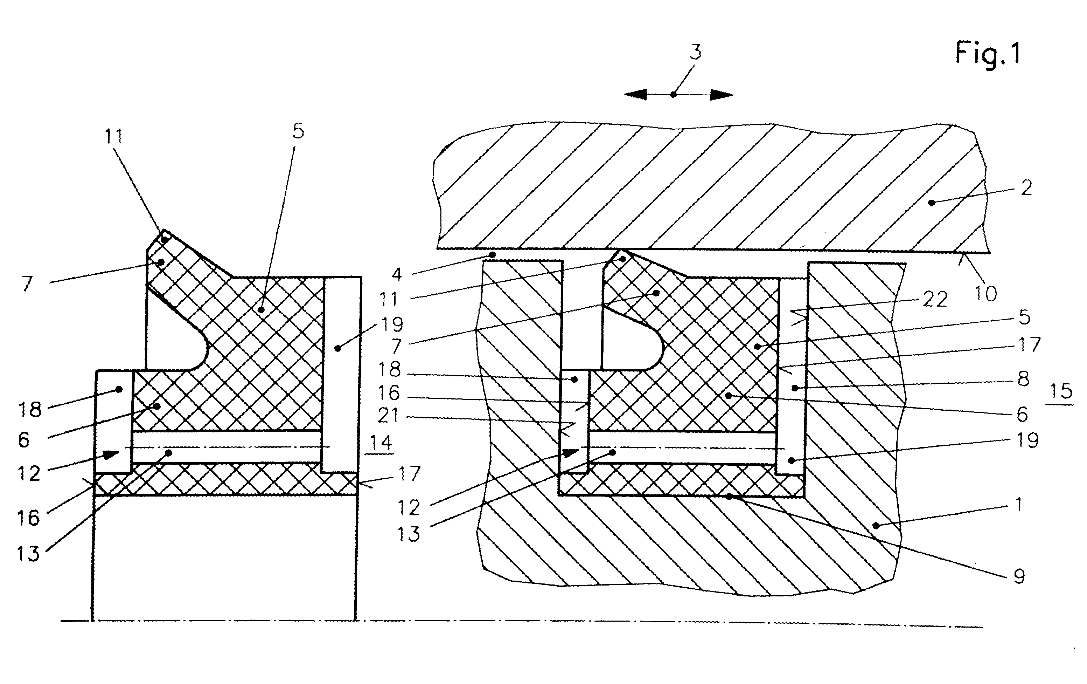

In den Fig. 1 bis 4 ist jeweils eine Dichtung 5 gezeigt, die einen Bestandteil einer Dichtungsanordnung bildet. Die Dichtungsanordnung ist für zwei einander konzentrisch zugeordnete Maschinenelemente 1, 2 vorgesehen, die in axialer Richtung 3 relativ zueinander hin- und herbewegbar sind. In den hier gezeigten Ausführungsbespielen Fig. 1, 2 und 4 ist es vorgesehen, daß das erste Maschinenelement 1 durch einen beidseitig durckbeaufschlagbaren Kolben gebildet ist und das andere Maschinenelement 2 durch einen den Kolben außenseitig mit radialem Abstand umschließenden Zylinder. Die Dichtung 5 ist mit ihrem ersten Dichtteil 6 statisch dichtend in einer radial nach außen offenen Nut 8 des Kolbens eingesetzt und stützt sich mit ihrem zweiten Dichtteil 7 dynamisch dichtend an der Oberfläche 10 des Zylinders ab.

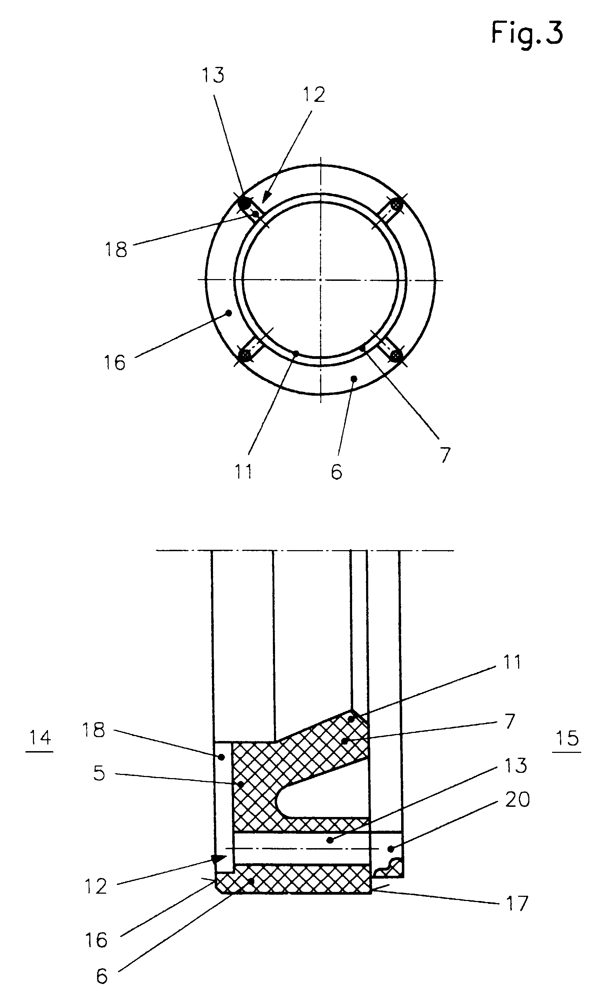

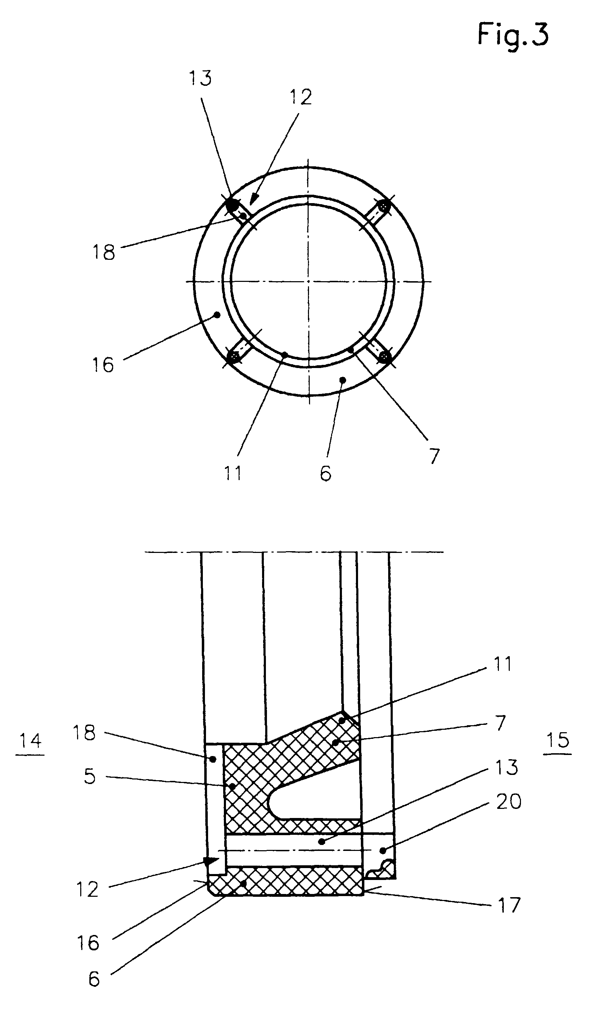

In Fig. 3 ist die Dichtung 5 zum Einbau in die Nut eines Zylinders vorgesehen und umschließt mit ihrer Dichtlippe 11 eine abzudichtende Stange.

Die zur Anwendung gelangenden Dichtungen 5 sind jeweils mit einer Drosseleinrichtung 12 versehen, um eine Endlagendämpfung zu bewirken.

Die Drosseleinrichtung 12 ist in den Fig. 1 bis 3 durch die Durchbrechung 13 gebildet, die einen kanalförmigen Querschnitt hat und die Dichtung 5 in axialer Richtung vollständig durchdringt. Die Drosseleinrichtung 12 ist jeweils im ersten Dichtteil 6 angeordnet, der stets relativ unbeweglich innerhalb einer Nut 8 angeordnet ist.

In Fig. 1 ist eine Dichtung 5 als Einzelteil im herstellungsbedingten Zustand gezeigt, die in axialer Richtung beiderseits im Bereich ihrer Stirnseiten 16, 17 jeweils mit gleichmäßig in Umfangsrichtung verteilten nutförmigen Ausnehmungen 18, 19 versehen ist, die eine strömungsleitende Verbindung zwischen den einander benachbarten, abzudichtenden Räumen ermöglichen. Im herstellungsbedingten Zustand weist die Dichtung 5 größere Abmessungen in radialer Richtung auf, als im eingebauten Zustand. Als Bestandteil der Dichtungsanordnung ist die Dichtung 5 mit radialer Vorspannung innerhalb der Nut angeordnet. Der erste Dichtteil 6 berührt den Nutgrund 9 flächig entlang seiner gesamten axialen Erstreckung mit gleichmäßiger radialer Vorspannung.

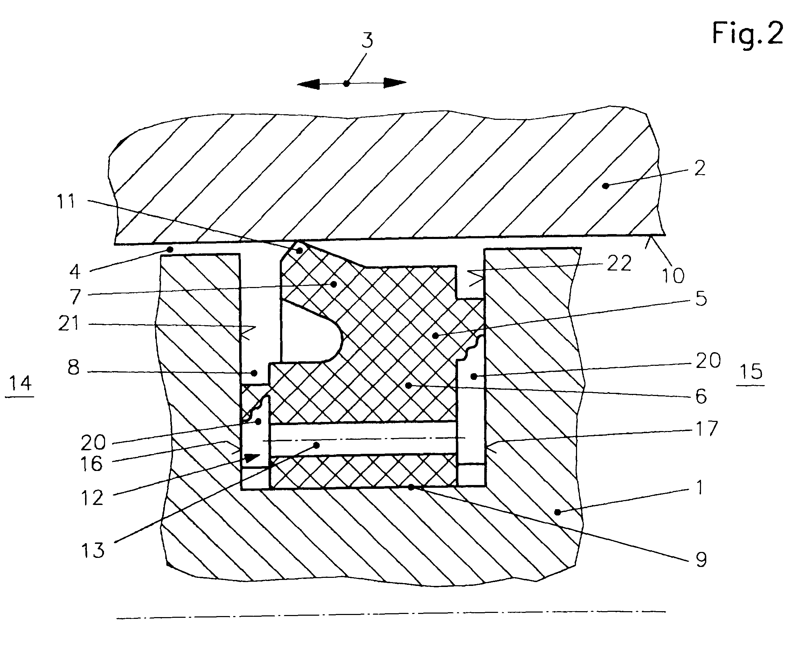

In Fig. 2 ist ein zweites Ausführungsbeispiel einer Dichtungsanordnung gezeigt, mit einer Dichtung 5, deren Einbausituation dem Ausführungsbeispiel aus Fig. 1 entspricht. Anstelle der Ausnehmungen gelangen stirnseitig 18, 19 angeordnete, in Umfangsrichtung verteilte noppenförmige Abstandhalter 20 zur Anwendung, wobei in diesem Ausführungsbeispiel axial beiderseits vier gleichmäßig in Umfangsrichtung verteilte Abstandhalter 20 vorgesehen sind.

In Fig. 3 ist ein Querschnitt und eine Ansicht durch ein Ausführungsbeispiel einer Dichtung 5 gezeigt. Die Dichtung 5 weist im Bereich ihrer einen Stirnseite 16 gleichmäßig in Umfangsrichtung verteilte Ausnehmungen 18 auf und im Bereich ihrer anderen Stirnseite 17 noppenförmige Abstandhalter 20, die ebenfalls gleichmäßig in Umfangsrichtung verteilt sind. Die Ansicht der Stirnseite 16 zeigt, daß sich die Ausnehmungen 18 von der radial inneren Begrenzung der Dichtung 5 bis zu den Durchbrechung 13 erstrecken.

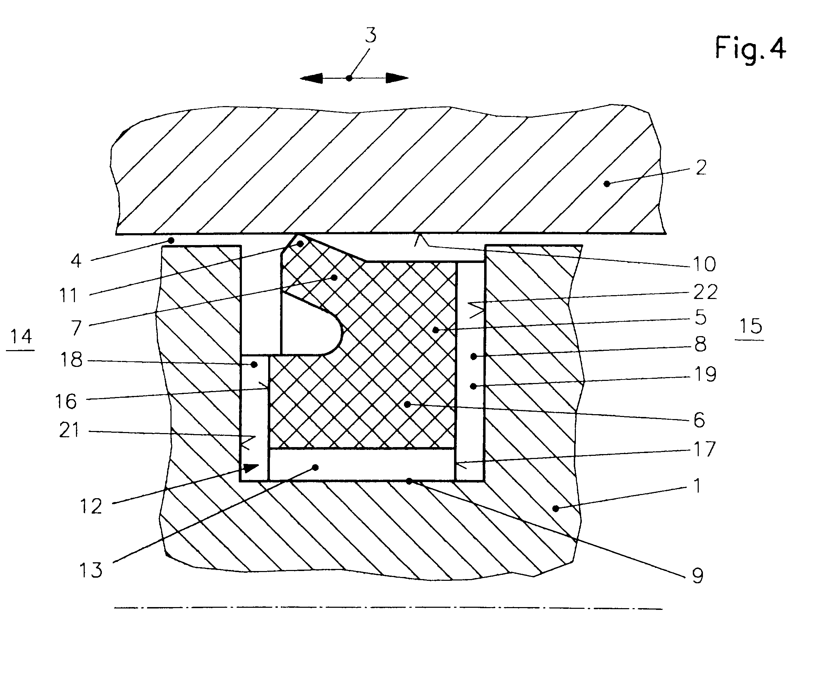

In Fig. 4 ist eine Dichtungsanordnung gezeigt, bei der die Drosseleinrichtung 12 durch einen sich im wesentlichen parallel zur Bewegungsrichtung 3 erstreckenden Kanal gebildet, der in radialer Richtung einerseits durch den Nut grund 9 der Nut 8 und in radialer Richtung andererseits durch die Durchbrechung 13 der Dichtung 5 gebildet. Die in Richtung des Nutgrunds 9 offene Ausnehmung der Dichtung 5 ist strömungsleitend mit den sich in radialer Richtung erstreckenden, nutförmigen Ausnehmungen 18, 19 verbunden.

In allen Ausführungsbeispielen ist es vorgesehen, daß der zweite Dichtteil 7 eine geringere Ausdehnung in axialer Richtung aufweist, als der erste Dichtteil 6, wobei der zweite Dichtteil 7 auf der der Dichtlippe 11 zugewandten Seite der axial benachbart angrenzenden Seitenfläche 21, 22 der Nut 8 mit Abstand benachbart zugeordnet ist. Die Beweglichkeit der Dichtlippe 11 in radialer Richtung bleibt dadurch während der gesamten Gebrauchsdauer erhalten.

## Patentansprüche

1. Dichtungsanordnung für zwei einander konzentrisch zugeordnete Maschinenelemente (1, 2), die in axialer Richtung relativ zueinander hin- und herbewegbar sind, wobei eines der Maschinenelemente (1) durch einen beidseitig druckbeaufschlagbaren Kolben oder eine Stange, und das andere Maschinenelement (2) durch einen den Kolben oder die Stange außenseitig mit radialem Abstand umschließenden Zylinder gebildet ist, umfassend eine in dem durch den Abstand gebildeten Spalt (4) angeordnete Dichtung (5) aus polymerem Werkstoff mit einem statisch abdichtenden ersten Dichtteil (6) und einem dynamisch abdichtenden zweiten Dichtteil (7), wobei eines der beiden Maschinenelemente (1, 2) eine in Richtung des anderen Maschinenelements offene Nut (8) aufweist, und wobei der erste Dichtteil (6) den Nutgrund (9) und der zweite Dichtteil (7) die der Nut zugewandte Oberfläche des anderen Maschinenelements (2) mit zumindest einer Dichtlippe (11) dichtend berührt, **dadurch gekennzeichnet**, daß die Dichtung (5) eine Endlagendämpfungseinrichtung für die Relativbewegung zwischen den beiden Maschinenelementen (1,2) aufweist, welche als in die Dichtung (5) integrierte Drosseleinrichtung (12) ausgelegt ist, welche durch eine sich im wesentlichen parallel zur Bewegungsrichtung (3) erstreckende, kanalartige Durchbrechung (13) gebildet ist, welche die Dichtung (5) vollständig durchdringt und die gegeneinander abzudichtenden Räume (14, 15) strömungsleitend miteinander verbindet.

2. Dichtungsanordnung nach Anspruch 1, **dadurch gekennzeichnet**, daß die Durchbrechung (13) durch einen sich im wesentlichen parallel zur Bewegungsrichtung erstreckenden, in Richtung des Nutgrunds (9) offenen Kanal gebildet ist.

3. Dichtungsanordnung nach Anspruch 1 oder 2, **dadurch gekennzeichnet**, daß die Drosseleinrichtung (12) im ersten Dichtteil (6) angeordnet ist.

4. Dichtungsanordnung nach einem der Ansprüche 1 bis 3, **dadurch gekennzeichnet**, daß die Dichtung (5) in axialer Richtung beiderseits im Bereich ihrer Stirnseiten (16, 17) jeweils zumindest eine sich in radialer Richtung erstreckende, nutförmige Ausnehmung (18, 10) aufweist, und daß die Ausnehmungen (18, 19) mittels der Durchbrechung (13) strömungsleitend miteinander verbunden sind.

5. Dichtungsanordnung nach einem der Ansprüche 1 bis 4, **dadurch gekennzeichnet**, daß die Dichtung (5) in axialer Richtung beiderseits auf ihren Stirnseiten (18, 19) jeweils in Umfangsrichtung verteilte, noppenförmige Abstandshalter (20) aufweist.

6. Dichtungsanordnung nach einem der Ansprüche 1 bis 5, **dadurch gekennzeichnet**, daß der erste Dichtteil (6) den Nutgrund (9) entlang seiner gesamten axialen Erstreckung mit gleichmäßiger radialer Vorspannung anliegend berührt.

7. Dichtungsanordnung nach einem der Ansprüche 1 bis 6, **dadurch gekennzeichnet**, daß nur der erste Dichtteil (6) beide den Nutgrund (9) axial begrenzende Seitenflächen (21, 22) anliegend berührt und daß die axiale Länge der Dichtung (5) der axialen Länge der Nut (8) entspricht.

8. Dichtungsanordnung nach einem der Ansprüche 1 bis 7, **dadurch gekennzeichnet**, daß der erste Dichtteil (6) eine Ausdehnung in axialer Richtung aufweist, die größer ist als die Ausdehnung des zweiten Dichtteils (7) in gleicher Richtung, und daß zumindest die Dichtlippe (11) der axial benachbart angrenzenden Seitenflächen (21, 22) mit Abstand benachbart zugeordnet ist.

## Claims

1. A sealing arrangement for two machine elements (1, 2) which are assigned concentrically to each other and can be moved back and forth in relation to each other in an axial direction, one of the machine elements (1) being formed by a piston which can be subjected to pressure from both sides, or by a rod, and the other machine element (2) being formed by a cylinder which encloses the piston or the rod on the outside with a radial spacing, comprising a seal (5) of polymeric material arranged in the gap (4) formed by the spacing, with a statically sealing first sealing part (6) and a dynamically sealing second sealing part (7), one of the two machine elements (1, 2) having a groove (8) which is open in the direction of the other machine element, and the first sealing part (6) making contact in a sealing manner with the groove base (9) and the second sealing part (7) making contact in a sealing manner, by at least one sealing lip (11), with the surface of the other machine element (2) facing the groove, characterized in that the seal (5) has an end-position damping device for the relative movement between the two machine elements (1, 2), which is designed as a restricting device (12) which is integrated into the seal (5) and is formed by a channel-like clearance (13) which extends substantially parallel to the direction of movement (3), completely penetrates the seal (5) and interconnects in a flow-conducting manner the spaces (14, 15) to be sealed off from one another.

2. A sealing arrangement according to claim 1, characterized in that the clearance (13) is formed by a channel which extends substantially parallel to the direction of movement and is open in the direction of the groove base (9).

3. A sealing arrangement according to either of claims 1 and 2, characterized in that the restricting device (12) is arranged in the first sealing part (6).

4. A sealing arrangement according to any one of claims 1 to 3, characterized in that the seal (5) has on both sides in the axial direction, in the region of its end faces (16, 17), in each case at least one groove-shaped recess (18, 19), extending in a radial direction, and in that the recesses (18, 19) are interconnected in a flow-conducting manner by means of the clearance (13).

5. A sealing arrangement according to any one of claims 1 to 4, characterized in that the seal (5) has on both sides in the axial direction, on its end faces (18, 19), in each case stud-shaped spacers (20), distributed in the circumferential direction.

6. A sealing arrangement according to any one of claims 1 to 5, characterized in that the first sealing part (6) makes contact in a bearing manner and with uniform radial prestress with the groove base (9), along its entire axial extent.

7. A sealing arrangement according to any one of claims 1 to 6, characterized in that only the first sealing part (6) makes contact in a bearing manner with both side faces (21, 22) axially bounding the groove base (9) and in that the axial length of the seal (5) corresponds to the axial length of the groove (8).

8. A sealing arrangement according to any one of claims 1 to 7, characterized in that the first sealing part (6) has an extent in the axial direction which is greater than the extent of the second sealing part (7) in the same direction, and in that at least the sealing lip (11) is assigned to the axially adjacent side faces (21, 22) alongside with a spacing.

## Revendications

1. Dispositif d'étanchéité pour deux éléments de machine (1, 2) adjoints concentriquement l'un à l'autre, qui peuvent être animés d'un mouvement de va et vient l'un par rapport à l'autre dans le sens axial, l'un des éléments de machine (1) étant constitué d'un piston susceptible d'être mis en pression de part et d'autre ou d'une tige, et l'autre élément de machine (2) d'un cylindre entourant à distance radiale les faces externes du piston ou de la tige, comprenant un joint d'étanchéité (5) en matériau polymère disposé dans la fente (4) formée par la distance, avec une première partie d'étanchéité (6) assurant l'étanchéité statique et une deuxième partie d'étanchéité (7) assurant l'étanchéité dynamique, l'un des deux éléments de machine (1, 2) comportant une rainure (8) ouverte en direction de l'autre élément de machine, et la première partie d'étanchéité (6) touchant de manière étanche le fond de rainure (9) et la deuxième partie d'étanchéité (7) la surface en regard de la rainure de l'autre élément de machine (2) avec au moins une lèvre d'étanchéité (11), caractérisé en ce que le joint d'étanchéité (5) comporte un dispositif amortisseur de fin de course pour le mouvement relatif entre les deux éléments de machine (1, 2), qui est réalisé sous forme de dispositif d'étranglement (12) intégré dans le joint d'étanchéité (5), lequel dispositif d'étranglement est formé par une rupture (13) de type canal s'étendant essentiellement parallèlement au sens de mouvement (3), laquelle rupture traverse complètement le joint d'étanchéité (5) et relie entre eux, de manière à assurer l'écoulement, les deux espaces (14, 15) à rendre étanches l'un par rapport à l'autre.

2. Dispositif d'étanchéité selon la revendication 1, caractérisé en ce que la rupture (13) est formée par un canal s'étendant essentiellement parallèlement au sens de mouvement et ouvert en direction du fond de rainure (9).

3. Dispositif d'étanchéité selon la revendication 1 ou 2, caractérisé en ce que le dispositif d'étranglement (12) est placé dans la première partie d'étanchéité (6).

4. Dispositif d'étanchéité selon l'une des revendications 1 à 3, caractérisé en ce que le joint d'étanchéité (5) comporte dans le sens axial, de part et d'autre au niveau de ses faces frontales (16, 17), à chaque fois au moins un creux (18, 10) en forme de rainure s'étendant dans le sens radial, et en ce que les creux (18, 19) sont reliés entre eux, au moyen de la rupture (13), de manière à assurer l'écoulement.

5. Dispositif d'étanchéité selon l'une des revendications 1 à 4, caractérisé en ce que le joint d'étanchéité (5) comporte dans le sens axial, de part et d'autre sur ses faces frontales (18, 19), à chaque fois des écarteurs (20) en saillie répartis dans le sens circonférentiel.

6. Dispositif d'étanchéité selon l'une des revendications 1 à 5, caractérisé en ce que la première partie d'étanchéité (6) adhère au fond de rainure (9), sur toute son extension axiale, sous précontrainte radiale uniforme.

7. Dispositif d'étanchéité selon l'une des revendications 1 à 6, caractérisé en ce que seule la première partie d'étanchéité (6) adhère aux deux faces latérales (21, 22) limitant axialement le fond de rainure (9), et en ce que la longueur axiale du joint d'étanchéité (5) correspond à la longueur axiale de la rainure (8).

8. Dispositif d'étanchéité selon l'une des revendications 1 à 7, caractérisé en ce que la première partie d'étanchéité (6) présente une extension dans le sens axial, qui est supérieure à l'extension de la deuxième partie d'étanchéité (7) dans le même sens, et en ce qu'au moins la lèvre d'étanchéité (11) est adjointe à distance aux faces latérales (21, 22) axialement contiguës.
